# EUROPEAN PATENT SPECIFICATION

(11) **EP 4 470 499 B1**
(45) Date of publication and mention of the grant of the patent: **05.08.2026**
(21) Application number: 24170079.8
(22) Date of filing: 12.04.2024
(51) Int. Cl.: A61C 15/04

(54) **ADJUSTABLE AND BENDABLE DENTAL FLOSS PICK**
EINSTELLBARER UND BIEGBARER ZAHNSEIDENMEISSEL
PINCE DE FIL DENTAIRE RÉGLABLE ET PLIABLE

(30) Priority: 30.05.2023 US 202363505061 P
(43) Date of publication of application: 04.12.2024
(73) Proprietor: Hsu, Solomen, Taipei City 106 (TW); Lu, Shepheron, Taipei City 106 (TW)
(72) Inventor: Hsu, Solomen, 106 Taipei City (TW)
(74) Representative: Lang, Christian

(56) References cited:
- GB-A- 2 554 660
- KR-A- 20190 021 898
- US-A- 6 065 479
- US-B2- 11 123 166

## Description

### TECHNICAL FILED

The present invention provides an adjustable and bendable dental floss pick, which is characterized in that a bendable part with a bending function is provided in the central portion of a holding-pressing part of the adjustable and bendable dental floss pick, so that the adjustable and bendable dental floss pick can be bent to the left and right with the bendable part as the central portion, thereby bending the dental floss so that the dental floss is in a tight or loose state.

### BACKGROUND OF THE INVENTION

Dental plaque is a biofilm gradually deposited around the tooth surface and can cause many periodontal diseases, such as gingivitis or periodontitis. The main cause of plaque formation is poor daily oral hygiene, that is, failure to follow effective oral cleaning methods, which in turn causes bacteria to adhere to the surfaces of teeth and gums.

Therefore, nowadays, people use oral cleaning tools such as toothbrushes, toothpicks, dental floss, dental floss picks, or mouthwash to perform oral cleaning activities. In order to remove food residues between teeth, dental floss or floss picks, in particular, are generally used for cleaning.

Dental floss picks available on the market are roughly divided into F-type dental floss picks and Y-type dental floss picks. In terms of use, the F-type floss picks are more suitable for cleaning the front teeth; the Y-type floss picks are more suitable for cleaning the back teeth. However, dental floss on the dental floss picks is of a linear design; that is, the dental floss is in a tight state. Due to improper use or incorrect application of force by a user, the dental floss stick is prone to breakage, causes damage to the teeth, and the gaps between each tooth and the surface of the teeth are not effectively cleaned. Therefore, the current design of linear-type floss picks has shortcomings in terms of cleaning the teeth. In addition, the tight-type floss picks currently available on the market can irritate or even damage the gums when used. Long-term use can lead to gum recession, causing another oral disease. Dental floss is a standard tool recommended by dentists and other professionals for oral cleaning. However, the general public must go through education and training before using it. Its use requires certain skills and is cumbersome, making its promotion and application difficult.

Document US 6,065,479 A describes a dental flosser having a pair of spaced apart arms across which a strand of dental floss is extended, and a handle extending in a direction different from said the arms. The arms and handle are essentially a flat contiguous injection molded plastic board, the handle having an aperture through its central area bordered by a pair of legs which are bendable to converge toward each other, a pair of wings extending from both outside edges of these legs. Each of the arms is an extension of one of the legs so that when the legs are pressed toward each other, the corresponding arms are urged to diverge from each other, thus stretching and tensioning the strand of floss extending therebetween. Document GB 2554660 A relates to an interdental cleaning device with two arms with proximal and distal ends, where the distal ends are spaced apart and each comprises a clamp or floss clamp for retaining an interdental cleaning element. Document US 11,123,166 B2A discloses a dual head dental floss pick. The dual head dental floss pick includes a body having a first end opposite a second end, wherein a pair of arms extend orthogonally from the body. A length of floss extends between a distal end of each of the pair of arms and the second end of the body, wherein the first end tapers to terminate in a scraping edge. Document KR 10-2019-0021898 A relates to a dental floss-assist tool. The dental floss-assist tool used to fix the dental floss comprises rotating bodies coupled to each other with a hinge shaft as a rotation shaft, and includes head portions formed on an upper portion of the hinge shaft and handle portions formed on a lower portion of the hinge shaft, a guide means guiding the dental floss toward a space between upper ends of the head portions of the rotating bodies, and a dental floss fixing means fixing the dental floss guided to the space between the both head portions of the rotating bodies.

Due to these inconveniences, for oral hygiene and health care, it is necessary to develop a new type of dental floss pick to help users who are not good at using dental floss or dental floss picks and those who need to quickly, effectively, and correctly clean their teeth to clean gaps between the teeth easily.

### DECRIPTION OF THE INVENTION

The present invention provides an adjustable and bendable dental floss pick according to claim 1, which comprises a dental floss holder having two sidearms and one connecting part, wherein the two sidearms respectively have a first end away from the connecting part and a second end connected to the connecting part, a dental floss is connected between the first ends, and the second ends are respectively connected to the front half of the connecting part; and a holding-pressing part having a front end connected to the connecting part and a rear end away from the connecting part, wherein the front end is connected to the rear half of the connecting part, a bendable part is provided in the central portion of the holding-pressing part, the bendable part is used to bend the holding-pressing part towards the left side and right side and drive the two sidearms to bend the dental floss.

In one embodiment, the two sidearms and the connecting part form a U-shaped or V-shaped structure.

In one embodiment, the connecting part, the two sidearms and the holding-pressing part of the adjustable and bendable dental floss pick are integrally formed. In addition, the holding-pressing part and the two sidearms are arranged in different orientations with respect to the connecting part; for example, the two sidearms are arranged in the front half of the connecting part, and the holding-pressing part is arranged in the rear half of the connecting part.

In the present invention, the material of the dental floss can be commonly used dental floss material well known to those skilled in the art. Dental floss is generally made of soft polymer materials, such as nylon, polyester fiber, acrylic fiber, polyethylene, Teflon, plant fiber material, or silk. In one embodiment, the material of the dental floss comprises nylon, Teflon, plant fiber material or silk. Furthermore, the dental floss can be artificial fiber or woven dental floss, wax-containing or wax-free dental floss, round or flat dental floss, or the dental floss can be additionally added with mint, xylitol, and other flavors or caries prevention substances. In some aspects, two ends of the dental floss are respectively connected to the first ends of the two sidearms.

In the present invention, the material of the adjustable and bendable dental floss pick (for example, the connecting part, the two sidearms, and the holding-pressing part) is an elastic and soft material. Therefore, when forces are applied from the left and right sides of the bendable part to bend the entire adjustable and bendable dental floss pick to the left and right, the adjustable and bendable dental floss pick does not break during normal use. However, through material selection and process design, a user can break and destroy the dental floss pick through the bendable part after use to avoid secondary use or other infections and contamination.

In some embodiments, the material of the dental floss pick comprises plastic material. In one embodiment, the plastic material comprises polypropylene (PP), polystyrene (PS), ABS (Acrylonitrile butadiene styrene) resin/acrylonitrile-butadiene-styrene copolymer, polyethylene terephthalate (PET), polyamide (PA), polyethylene (PE), polyurethane (PU), polycarbonate (PC) or high-density polyethylene (HDPE). The material of the dental floss stick has a certain degree of elasticity and does not contain hazardous materials that are harmful to human health. Since the material of the dental floss pick is elastic, the dental floss pick can be bent appropriately.

In some aspects, the holding-pressing part is a part on which a user holds. In general, the holding-pressing part is in a rod shape. However, considering that the present invention requires a long bendable part (for example, a groove) in the central portion of the holding-pressing part, the holding-pressing part of the present invention is a long component with a certain width to accommodate the bendable part (for example, a groove).

In the present invention, the function of the bendable part is to provide a location for applying force to bend the dental floss pick. Therefore, the bendable part is a component with a bending function. One of the types of bendable part is a bendable groove, and the groove is designed in the central portion of the holding-pressing part, so that the left and right sides of the holding-pressing part (i.e., the part adjacent to the left and right sides of the groove on the holding-pressing part) are bent with the groove as the central portion. In one embodiment, the groove can be designed as a V shape or a U shape. Through the bending of the groove, when the two sidearms of the dental floss pick are bent relatively, the dental floss is in a shape similar to the letter C or even the letter U. Certainly, the oblique angles between the bottom part of the groove and its left and right sides can also be designed to be asymmetrical depending on requirements, that is, the angle between the left and right sides in the groove is an asymmetrical angle or included angle. The groove and the oblique angle design existing therein can affect the maximum bending angle of the adjustable and bendable dental floss pick, thereby affecting the tightness of the dental floss, that is, the dental floss can be in various states. Different states of dental floss are applicable to different tooth conditions. Therefore, the present invention allows the dental floss to have various tightness and shapes through different grooves and bending angles to meet various tooth cleaning requirements.

In the present invention, the groove can be provided in the central portion of the top surface or the bottom surface of the holding-pressing part or in the central portion of both surfaces. Therefore, the bendable part can be arranged in the central portion of one surface or both surfaces of the holding-pressing part. In one embodiment, the bendable part is provided on the top surface and/or the bottom surface of the holding-pressing part. Therefore, the holding-pressing part of the adjustable and bendable dental floss pick of the present invention can be designed to have a groove on one surface or both surfaces. Since the groove is bendable, the design of the grooves on both surfaces allows the adjustable and bendable dental floss pick to be bent towards different surfaces or directions.

In the present invention, the holding-pressing part can be regarded as two independent components, one half to the left and the other half to the right, namely the left half of the holding-pressing part and the right half of the holding-pressing part. When the holding-pressing part is divided into left and right half independent components, the bendable part located in the central portion of the holding-pressing part forms a connecting component of the left and right halves of the holding-pressing part. Therefore, the bendable part can be used as a connecting component to connect the left and right halves of the holding-pressing part while having a bend function. In one embodiment, the holding-pressing part is divided into left and right halves, and the bendable part forms a connecting component to connect the left and right halves of the holding-pressing part.

The holding-pressing part on the adjustable and bendable dental floss pick of the present invention can have different designs. For example, the holding-pressing part can be designed to have a central hollow space, and the bendable parts are respectively arranged on the front end and rear end of the central hollow space. A design such as this allows a user to bend the adjustable and bendable dental floss pick more easily. In one embodiment, the holding-pressing part has a central hollow space, and the bendable parts are respectively provided at the front end and the rear end of the holding-pressing part.

In addition, considering that users sometimes place dental floss picks on a table or other flat surfaces, there is a risk that the dental floss is in contact with the table, causing hygiene problems. Therefore, the present invention proposes a design in which the horizontal height of the dental floss holder is higher than the horizontal height of the holding-pressing part. This design turns the connecting part into an arc-shaped structure, which is bent upward from the holding-pressing part to the extending direction of the two sidearms, so that the dental floss holder is on a level higher than the holding-pressing part. In one embodiment, the connecting part is an arc-shaped structure, which is bent upward from the holding-pressing part toward the extending direction of the two sidearms, so that the dental floss holder is higher than the holding-pressing part. Through such a design, when the adjustable and bendable dental floss pick is placed on a tabletop, the holding-pressing part contacts the tabletop, but the horizontal height of the floss holder is higher than that of the holding-pressing part; as a result, the dental floss on the dental floss holder is not in contact with the tabletop, ensuring the hygiene of dental floss.

Furthermore, the present invention can add a protruding part on the bottom surface of the holding-pressing part (the surface that contacts a flat surface such as a tabletop), for example, protruding parts are provided on the bottom surface of the front end and the rear end of the holding-pressing part, respectively. The function of the protruding parts is to raise the adjustable and bendable dental floss pick and to maintain the stable state of the adjustable and bendable dental floss pick when it is placed on a flat surface. In one embodiment, the bottom surface of the front end and rear end of the holding-pressing part are respectively provided with a protruding part so that when the adjustable and bendable dental floss pick is placed on a flat surface, the floss holder is not in contact with the flat surface. Therefore, when the adjustable and bendable dental floss pick is placed on a flat surface, only the protruding parts contact the flat surface, and the entire adjustable and bendable dental floss pick is not in contact with the flat surface, thereby maintaining the hygiene of dental floss.

In some aspects, two side surfaces on two sides of the holding-pressing part are designed as an elongated shape and the thickness can be the same or different. Furthermore, part of the side surface on each side of the holding-pressing part can be designed to have an increased contact area, for example, it can be designed as an elliptical shape. The advantage of the increased contact areas on both side surfaces is that they allow a user's fingers to hold the adjustable and bendable dental floss pick with larger force-applying areas. In one embodiment, the side surface on each side of the holding-pressing part are in an elliptical shape to provide pressing force.

In the present invention, an antislip part can be provided on the holding-pressing part, and it can be provided on the top, side, or bottom surface of the holding-pressing part. The function of the antislip part is to provide an adjustable and bendable dental floss pick that allows a user to hold it stably. In some aspects, the antislip part is a component with a concave-convex structure. The concave-convex structure is designed to increase friction when being in contact with fingers. Therefore, when the user's fingers press the antislip part on the holding-pressing part, the adjustable and bendable dental floss pick can be more conveniently and steadily holded. In one embodiment, the holding-pressing part further comprises an antislip part arranged on the top, side, or bottom surface of the holding-pressing part to facilitate holding.

In some aspects, the holding-pressing part can be based on force application and/or ergonomics for designs of shape and structure, further adding with an extra pressing component, this is, to facilitate the user on bending and using the adjustable and bendable dental floss pick. The present invention can design pressing components on the left and right sides of the holding-pressing part, respectively, to provide a better force application when a user applies force from the left and right sides of the holding-pressing part for bending. In other words, by pressing the pressing components on the left and right sides of the holding-pressing part, the user bends the dental floss pick to the left and right. Therefore, the pressing component can be designed as a component with a larger area to be pressed with a user's fingers. In one embodiment, the left and right sides of the holding-pressing part are respectively connected with a first pressing component, which is used to press and apply pressing force. The shape of the pressing component is not limited and can be semicircular, semielliptical, square, or rectangular. In addition, no matter what the form of the pressing component is, it does not affect the bending function of the the dental floss pick of the present invention. In another embodiment, the pressing component and the holding-pressing part are an integrally formed structure.

In the present invention, the pressing component can also be designed at any position on the outer side of each of the two sidearms. For example, a pressing component can be connected to the outer side of the right sidearm, and a pressing component can be connected to the outer side of the left sidearm. Therefore, the outer sides of the two sidearms are respectively provided with a pressing component, and a user can bend the dental floss pick to the left and right by pressing these two pressing components. In one embodiment, each of the two sidearms is connected to a second pressing component on a single outer side, which is used to press and apply pressing force.

In addition, when dental floss is directly and fixedly connected to the two sidearms of the dental floss pick, the user discards the entire dental floss pick after using the dental floss pick. Therefore, the present invention further proposes a design that allows the adjustable and bendable dental floss pick to be used repeatedly. In this design, the present invention can design a through hole at the first ends of the two sidearms on the adjustable and bendable dental floss pick. The purpose of the through hole is to allow dental floss to pass through and be wound around and fixed. Therefore, the two ends of the dental floss is wound around and fixed on the two through holes. Furthermore, after the dental floss passes through and is wound around those two through holes, one end of the dental floss is fixed on one of the through holes, and the other end is wound around and fixed on a single pressing component. Since the dental floss is fixed by passing through and winding around the through hole or the pressing component instead of being directly and fixedly connected to the two sidearms of the dental floss stick, the dental floss can be removed from the adjustable and bendable dental floss pick and new dental floss can be re-wound and fixed on the adjustable and bendable dental floss pick. Therefore, after using the dental floss, the user can remove the dental floss from the adjustable and bendable dental floss pick and keep the adjustable and bendable dental floss pick itself, and then place a new dental floss on the adjustable and bendable dental floss stick. This design allows the adjustable and bendable dental floss pick itself to be used repeatedly by simply replacing the dental floss. In one embodiment, the first ends of the two sidearms are respectively provided with a through hole, wherein one end of the dental floss passes through and winds around the through hole on the first end of the two sidearms; and the other end of the dental floss winds around and is fixed on the first pressing component or the second pressing component.

In addition, the present invention can also provide other components for dental floss wounding for fixing dental floss pass through the through holes. The components for dental floss wounding can be designed at any location of the adjustable and bendable dental floss pick, and the function of the components for dental floss wounding is only used for providing a location for wounding and fixing the dental floss, not providing pressing. For example, to punch hole(s) onto the holding-pressing part for dental floss wounding and fixing.

In the present invention, the bendable part is arranged in the central portion of the holding-pressing part; as a result, when the user applies a force onto the left and right sides of the holding-pressing part, the entire adjustable and bendable dental floss pick can be bent to the left and right with the bendable part as the central portion, that is, in addition to bending the left and right sides of the holding-pressing part, the two sidearms on the connecting part are also bent to the left and right. Since the two sidearms are bent to the left and right, the dental floss connected between the two sidearms is bent accordingly. Therefore, when the adjustable and bendable dental floss pick is in an unbent state, the dental floss is in a tight state; for example, the dental floss is a straight line. After the adjustable and bendable dental floss pick is bent, the dental floss is in a C shape or a U shape, that is, the tension/stress of the dental floss becomes lower. When a user bends the adjustable and bendable dental floss pick, the dental floss is in a C shape or even a U shape; at this time, the stress of dental floss is reduced; as a result, damage to teeth or gums while cleaning the teeth caused by the stress is reduced. Therefore, when the dental floss is in a C shape or U shape, gaps between teeth and gaps between teeth and gums are covered most properly, achieving effective teeth cleaning purposes. Accordingly, the present invention allows the dental floss on the dental floss pick to be adjusted into a C shape or U shape by a design that enables the dental floss pick to be bent to the left and right. It makes the dental floss pick convenient to use and operate and can be used safely and effectively, thereby achieving the purpose of effective tooth cleaning.

Therefore, the core concept of the present invention lies in the dental floss pick that can be bent like a mirror image or a non-mirror image. In addition, various angles of the mirror/non-mirror image bending direction and the direction of the dental floss can be designed to satisfy users' needs, and a parallel angle, in particular, provides the best result. Accordingly, the mirror image/non-mirror image bending makes the dental floss on the dental floss pick from a tight state to a loose state.

Generally, when the dental floss is in a tight state, it can be used to pass through the gaps between teeth; when the dental floss is in a loose state, it naturally forms a C or even U shape according to the design of the bending angle of the dental floss pick, achieving the purpose of safely and effectively cleaning teeth without damaging the teeth and gums. Therefore, when the dental floss is in a C or even U shape, the gaps between teeth and the gaps between the teeth and gums are covered most properly. The use of current dental floss requires a lot of practice and even training before users can learn how to wind the dental floss around their fingers so that the dental floss is in a C or U shape to clean the teeth and oral cavity. The present invention allows users to use the dental floss pick with almost no training requirements through its inherent design to obtain the C or U-shaped state of the dental floss by bending the dental floss pick. Since the dental floss can be adjusted into a C or U shape, no harm is caused to the teeth or gums by the stress of the tight floss like current ordinary dental floss picks.

A bendable part is designed in the central portion of the dental floss pick, which can be produced by using a general mold design or a plastic injection process. The main body of the dental floss pick can be equipped with ergonomic handles or fixing points suitable for applying forces by fingers, making it easy to bend or unbend relatively. However, the present invention is not affected or limited whether it is further equipped with other ergonomic handles or fixed points. The concept and practice of the present invention is to bend the inherent body of the dental floss pick, so that the dental floss is adjusted to be tight and in a C or U-shaped form, thereby naturally achieving purposes such as correct use and convenient operation and safe and effective use of the dental floss/dental floss picks. This design also satisfies the requirements for dental floss picks and dental floss with angles customized according to the oral cavities and tooth structures of those patients whom dentists treat.

### BRIEF DESCRIPTION OF THE DRAWINGS

FIG. 1A and FIG. 1B show an adjustable and bendable dental floss pick with a V-shaped groove, wherein FIG. 1A shows an adjustable and bendable dental floss pick with a V-shaped groove in an unbending state and FIG. 1B shows an adjustable and bendable dental floss pick with a V-shaped groove in a bending state.
FIG. 2A and FIG. 2B show an adjustable and bendable dental floss pick with a U-shaped groove, wherein FIG. 2A shows an adjustable and bendable dental floss pick with a U-shaped groove in an unbending state and FIG. 2B shows an adjustable and bendable dental floss pick with a U-shaped groove in a bending state.
FIG. 3 shows an adjustable and bendable dental floss pick with a floss replacement function.
FIG. 4 shows an adjustable and bendable dental floss pick with grooves on both surfaces.
FIG. 5 shows an adjustable and bendable dental floss pick with a first type of holding-pressing part design.
FIG. 6 shows an adjustable and bendable dental floss pick with a second type holding-pressing part design.
FIG. 7 shows an adjustable and bendable dental floss pick with a third type holding-pressing part design.

### DETAILLED DESCRIPTION OF PREFERRED EMBODIMENTS

The following examples are non-limiting and merely represent aspects and features of the present invention.

The design of the present invention was an adjustable and bendable dental floss pick, and the adjustable and bendable dental floss pick was bent to the left and right. By bending the dental floss pick in this manner, the dental floss on the dental floss pick could be deformed; that is, the dental floss was in a tight and loose state. The deformation of dental floss could be applied to various tooth-cleaning conditions.

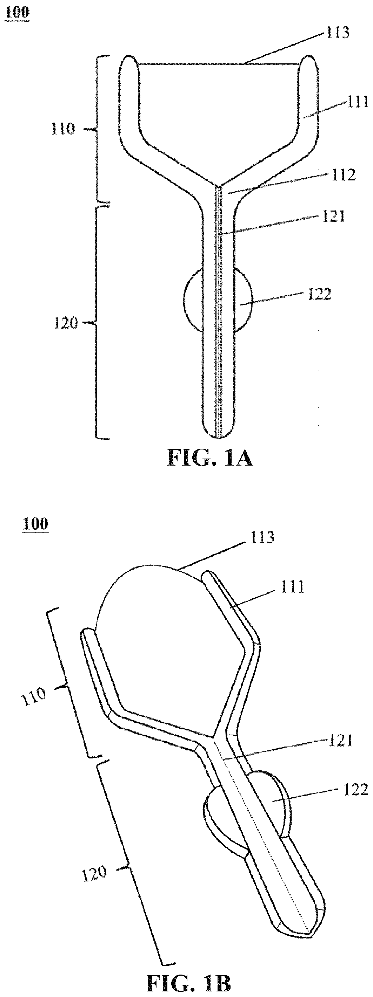

As shown in FIG. 1A, the present invention provided an adjustable and bendable dental floss stick 100 with a V-shaped bendable part, which had a dental floss holder 110 having two sidearms 111 and one connecting part 112, the two sidearms 111 respectively had a first end away from the connecting part 112 and a second end connected to the connecting part 112, a dental floss 113 was connected between the first ends, and the second ends were respectively connected to the front half of the connecting part 112; and a holding-pressing part 120 having a front end connected to the connecting part 112 and a rear end away from the connecting part 112, wherein the front end was connected to the rear half of the connecting part 112, and a bendable part 121 was provided in the central portion of the holding-pressing part 120, the bendable part 121 was a V-shaped groove, the bendable part 121 was used to bend the holding-pressing part 120 to the left and right sides, and drove the two sidearms 111 to bend the dental floss 113.

In addition, a first pressing component 122 was designed on the left and right sides of the holding-pressing part 120 for a user to apply force and press from the first pressing component 122, so that the left and right sides of the holding-pressing part 120 connected to the first pressing component 122 bent to the left and right, allowing the entire adjustable and bendable dental floss pick 100 to bend. Therefore, the design purpose of the first pressing component 122 was to provide the user with an improved force-applying part to bend the dental floss pick, thereby bending the dental floss.

In addition, the first pressing component 122 could be designed at any location on the left and right sides of the holding-pressing part 120, and could also be designed on the outer side of the two sidearms 111. Therefore, a second pressing component could be connected to one single outer side of each of the two sidearms 111 to provide a force-applying and pressing part. Since the pressing component was designed to allow the user to apply force conveniently, the pressing component could be arranged at any location on the left and right sides of the adjustable and bendable dental floss pick itself.

FIG. 1B shows the bending state of the adjustable and bendable dental floss pick 100 of FIG. 1A. When the user pressed the first pressing component 122 to bend the adjustable and bendable dental floss pick 100, the left and right sides of the holding-pressing part 120 bent toward the bendable part 121, drove the two sidearms 111 to bend. Therefore, the dental floss 113 connected to the two sidearms 111 changed from a tight state to a loose state because of the bending. Depending on the bending angles, the dental floss 113 became a C-shape or U-shape.

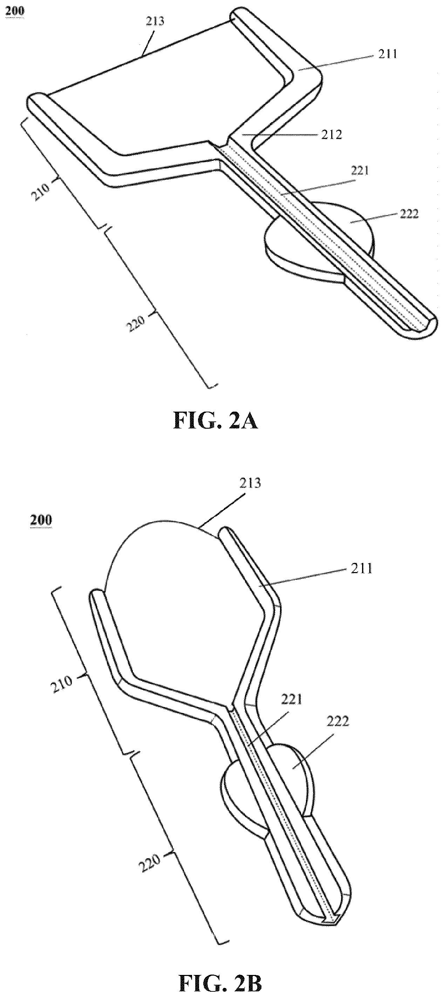

In addition, the present invention further provided a design of an adjustable and bendable dental floss pick 200 having a U-shaped bendable part and the U-shaped bendable part was a U-shaped groove, and oblique angles were provided in the bottom part of the groove and its left and right sides, respectively. As shown in FIG. 2A, the adjustable and bendable dental floss pick 200 with a U-shaped groove had a dental floss holder 210 having two sidearms 211 and a connecting part 212, wherein the two sidearms 211 respectively had a first end away from the connecting part 212 and a second end connected to the connecting part 212, a dental floss 213 was connected between the first ends, and the second ends were respectively connected to the front half of the connecting part 212; and a holding-pressing part 220 having a front end connected to the connecting part 212 and a rear end away from the connecting part 212, wherein the front end was connected to the rear half of the connecting part 212, a bendable part 221 was provided in the central portion of the holding-pressing part 220, and the bendable part 221 was a U-shaped groove, the bendable part 221 was used to bend the holding-pressing part 220 towards the left and right sides and drove the two sidearms 211 to bend the dental floss 213. In addition, a first pressing component 222 was designed on the left and right sides of the holding-pressing part 220 for the user to apply force and press from the first pressing component 222.

As shown in FIG. 2A, an oblique angle was respectively provided at the bottom part of the U-shaped groove and its left and right sides. The oblique angles at the bottom part of the U-shaped groove and its left and right sides could be designed as 10 degrees so that the angle between the left and right sides could be 20 degrees. In this bending state, the dental floss could have a maximum curve similar to a U-shape state, which was suitable for teeth with smaller sizes and larger curvatures. Furthermore, the oblique angles at the bottom part of the U-shaped groove and its left and right sides could be designed as 80 degrees so that the angle between the left and right sides could reach 160 degrees. In this state, the dental floss was slightly curved, which was suitable for teeth with larger sizes and smaller curvatures.

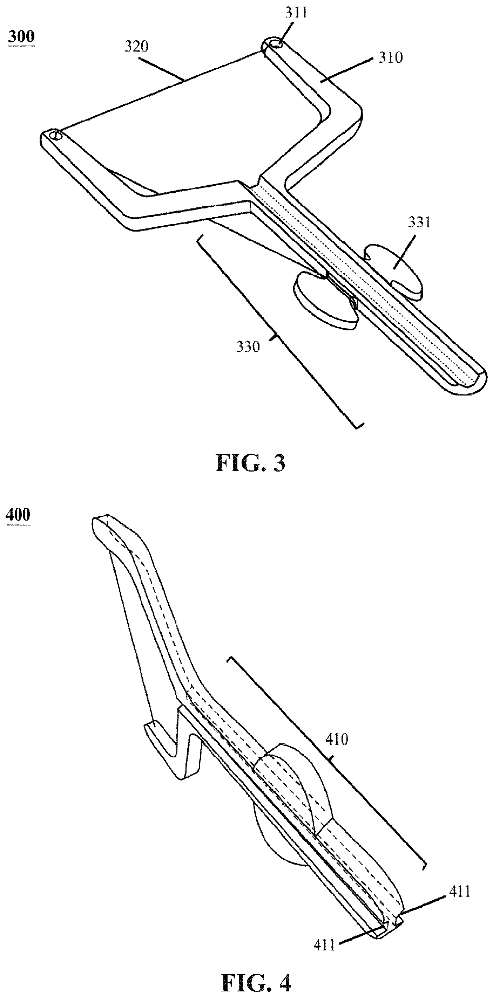

FIGs. 3 and 4 were an improved design of the adjustable and bendable dental floss pick of the present invention. FIG. 3 shows an adjustable and bendable dental floss pick 300 with a floss replacement function. Each of the two sidearms 310 on the U-shaped dental floss holder of the adjustable and bendable dental floss pick 300 with a dental floss replacement function had a through hole 311. The function of the through holes 311 was to allow the dental floss 320 to pass through and wind around the through holes 311. After the dental floss 320 passed through those two through holes 311, one end of the dental floss 320 wound around the first pressing component 331 of the holding-pressing part 330 of the bendable dental floss pick for fixation. Through the design of the through holes and the pressing components of the bendable dental floss pick, the dental floss could be wound around these components for being fixed. At the same time, the dental floss could also be removed from the dental floss pick and replaced with a new dental floss. Therefore, the dental floss became a movable design, not a design that was integrated with the dental floss pick itself. The advantage of this design was that the dental floss could be removed from the dental floss pick and replaced with a new one; as a result, the dental floss pick itself could be used repeatedly, and only the dental floss was replaced.

FIG. 4 is an adjustable and bendable dental floss pick 400 with grooves on both surface. Compared with the design of the adjustable and bendable dental floss pick shown in FIG. 2A, the two surface of the holding-pressing part 410 of the adjustable and bendable dental floss pick 400 were respectively provided with a bendable part 411, which was a U-shaped groove. Since the U-shaped groove was a bendable component, the design of the U-shaped grooves on both surfaces of the holding-pressing part 410 allowed the user to use the U-shaped groove to bend the adjustable and bendable dental floss pick 400 from two different surfaces. Therefore, the design of the adjustable and bendable dental floss pick, bendable from both surfaces, was more convenient for the users.

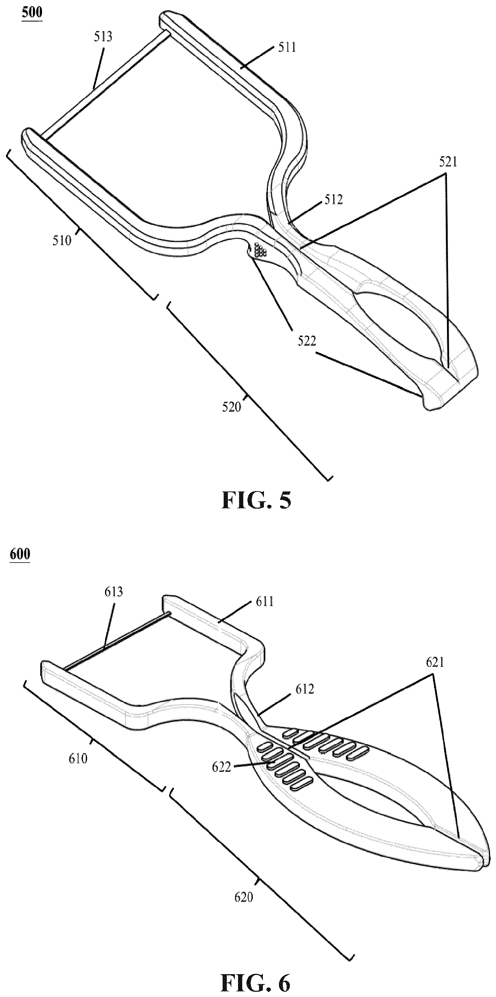

Furthermore, the present invention also had different improved designs of the holding-pressing part of the dental floss pick, as shown in FIGs. 5 to 7. FIG. 5 is an adjustable and bendable dental floss pick with a first type of holding-pressing part design. As shown in FIG. 5, the adjustable and bendable dental floss pick 500 had a dental floss holder 510 having two sidearms 511, a connecting part 512, a dental floss 513, and a holding-pressing part 520. The connecting part 512 was an arc-shaped structure, which was bent upward from the holding-pressing part 520 toward the extending direction of the two sidearms 511 so that the floss holder 510 was higher than the holding-pressing part 520. The design allowed the horizontal height of the dental floss holder 510 to be higher than that of the holding-pressing part 520 so that when the adjustable and bendable dental floss pick 500 was placed on a flat surface, the holding-pressing part 520 was close to or near the flat surface, but the floss holder 510 was in no contact with the flat surface. Therefore, the dental floss 513 on the dental floss holder 510 was not in contact with the flat surface so as to keep the dental floss 513 clean and hygienic.

In addition, the holding-pressing part 520 of the adjustable and bendable dental floss pick 500 had a central hollow space, and the bendable part 521 was provided at the front end and the rear end of the holding-pressing part 520. The bendable part 521 was used to provide the function of bending the adjustable and bendable dental floss pick 500. At the same time, a protruding part 522 was provided on the bottom surface of the front end and the rear end of the holding-pressing part 520 to raise the entire adjustable and bendable dental floss pick 500; the purpose was also to allow the protruding part 522 to be in contact with a flat surface when the adjustable and bendable dental floss pick 500 was placed on that flat surface. The dental floss holder 510 located above the protruding part 522 did not touch the flat surface; as a result, the dental floss 513 was not in contact with the flat surface.

FIG. 6 is an adjustable and bendable dental floss pick with a second type holding-pressing part design. As shown in FIG. 6, the adjustable and bendable dental floss pick 600 had a dental floss holder 610 having two sidearms 611, a connecting part 612 and a dental floss 613; and a holding-pressing part 620. The connecting part 612 was an arc-shaped structure, which was bent upward from the holding-pressing part 620 toward the extending direction of the two sidearms 611 so that the horizontal height of the dental floss holder 610 was higher than that of the holding part 620. The overall design of the adjustable and bendable dental floss pick 600 was to prevent the dental floss 613 from contacting a flat surface when the adjustable and bendable dental floss pick 600 was placed on that flat surface. Furthermore, the holding-pressing part 620 of the adjustable and bendable dental floss pick 600 had a central hollow space, and the bendable part 621 was provided at the front end and the rear end of the holding-pressing part 620.

In addition, the holding-pressing part 620 was provided with an antislip part 622, and the function of the antislip part 622 was to increase the friction area with the fingers, allowing the user to easily hold and apply force to the adjustable and bendable dental floss pick 600. Accordingly, the design of the antislip part 622 was a component with a concave-convex structure so that when the user used the adjustable and bendable dental floss pick 600, the dental floss pick did not slip away easily.

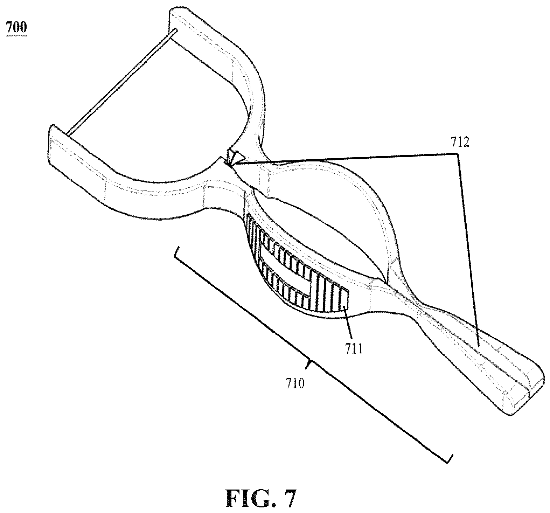

FIG. 7 is an adjustable and bendable dental floss pick with a third type holding-pressing part design. As shown in FIG. 7, the holding-pressing part 710 of the adjustable and bendable dental floss pick 700 had a central hollow space, and the two outer sides of the central hollow space were in an elliptical shape to increase the contact area of the user's fingers. Furthermore, an antislip part 711 was further designed on the outer side to allow the user to easily hold and apply force onto the adjustable and bendable floss pick 700. Moreover, the bendable part 712 was provided at the front end and the rear end of the holding-pressing part 710.

In addition, the design of the holding-pressing part of the present invention could be regarded as left and right halves as independent components. Accordingly, the bendable part could be used as a connecting component between the left and right halves of the holding-pressing part and provided a bending function. Therefore, in the various designs of adjustable and bendable floss picks, the bendable part was designed as a bendable component, and its form could be a groove or a connecting component for connecting the left and right halves of the holding-pressing part.

The adjustable and bendable dental floss pick of the present invention was subjected to three tests to demonstrate its effectiveness in cleaning the tooth surface and gaps between the teeth, its safety in protecting the gums, and its ergonomically convenient use.

The first test was based on ISO 28158: 2018, the latest international standard on the tensile force of the dental floss of a dental floss pick. According to this international standard, dental floss was supposed to be able to withstand a tensile force of 10N (approximately 1kgf) and would not break at either end. The present invention used 15 adjustable and bendable dental floss pick samples with the dental floss in a tight state, and another 15 adjustable and bendable dental floss pick samples with the dental floss in a bending state for testing. After being tested with a calibrated tension machine, the results met the international standard that required a continuous tensile force of 10N for 10 seconds. Another 10 adjustable and bendable dental floss pick samples were subjected to destructive tests, and the results showed that the tensile force was 300 N (approximately 3.0 kgf) or more, three times the requirements of the international standard, causing the dental floss to fall off from the dental floss pick.

The second test was a tooth-cleaning test, in which toothpaste was applied to tooth models as stains. The simulated tooth-cleaning tests were conducted by inserting adjustable and bendable dental floss picks having dental floss in a tight state and adjustable and bendable dental floss picks having dental floss in a bending state into gaps between the teeth of the dental model to scrape off the coated toothpaste, and each test was performed by 15 participants. Commercially available Oral-B and 3M dental floss picks were selected as control groups. The results showed that the tooth-cleaning efficiency of the adjustable and bendable dental floss pick having dental floss in a bending state was 46.47%, and the tooth-cleaning efficiency of the adjustable and bendable dental floss picks having dental floss in a tight state was 31.27%, significantly higher than the control groups, 27.53% for Oral-B dental floss picks and 21.13% for 3M dental floss picks. The results showed that the tooth cleaning efficiency of the adjustable and bendable dental floss picks having dental floss in a bending state was higher than that of the adjustable and bendable dental floss picks having dental floss in a tight state. It proved that, to achieve better tooth cleaning efficiency, dental floss picks needed to be designed in a way that made the dental floss bendable.

The third test adopted the International Standard for Medical Devices IEC 62366-1:2015 to conduct user ergonomic tests of the adjustable and bendable dental floss pick. In this test, survey questionnaire was designed based on the method of this International Standard, and users themselves provided scores based on their real feelings to obtain real-world data as product feedbacks. The review focused on three aspects: convenience of use, tooth cleaning effect, and gum protection. The results showed that based on users' feedbacks on those three aspects, the adjustable and bendable dental floss pick was acceptable to users, and the average gained scores were higher than those of the control groups. Through these clinical-like ergonomic tests, it was proven that the adjustable and bendable dental floss pick had the advantages of convenience of use, tooth cleaning efficiency, and gum safety protection when compared to ordinary floss pick products.

Therefore, the main feature of the adjustable and bendable dental floss pick of the present invention was the design of the bendable part in the central portion of the holding-pressing part. The function of the bendable part was to allow the adjustable and bendable dental floss pick to be bent to the left and right, thereby bending the dental floss so that it can have different tightness states for the convenience of the user to clean the teeth.

The present invention appropriately described may be practiced with conditions or limitations not specifically disclosed herein. The terms used herein are illustrative only and not intended to be limiting. No distinction is made between these terms and any equivalents thereto, but it should be recognized that the rights of the present invention may be modified. Therefore, although the present invention has been described in terms of embodiments and other aspects, the content disclosed herein may be modified and varied by those skilled in the art, and such modifications and variations are deemed to be within the scope of the rights of the present invention.

## Claims

1. An adjustable and bendable dental floss pick (100, 200, 300, 400, 500, 600, 700), which comprises:
a dental floss holder (110, 210, 510, 610) having two sidearms (111, 211, 310, 511, 611) and a connecting part (112, 212, 512, 612), wherein the two sidearms (111, 211, 310, 511, 611) respectively have a first end away from the connecting part (112, 212, 512, 612) and a second end connected to the connecting part (112, 212, 512, 612), a dental floss (113, 213, 320, 513, 613) is connected between the first ends, and the second ends are respectively connected to the front half of the connecting part (112, 212, 512, 612); and
a holding-pressing part (120, 220, 330, 410, 520, 620, 710) having a front end connected to the connecting part (112, 212, 512, 612) and a rear end away from the connecting part (112, 212, 512, 612), wherein the front end is connected to the rear half of the connecting part (112, 212, 512, 612),
wherein the dental floss pick (100, 200, 300, 400, 500, 600, 700) is made of an elastic and soft material, **characterized in that**
a bendable part (121, 221, 411, 521, 621, 712) is provided in the central portion of the holding-pressing part (120, 220, 330, 410, 520, 620, 710), and, when the holding-pressing part (120, 220, 330, 410, 520, 620, 710) is pressed, the two sidearms (111, 211, 310, 511, 611) are driven to bend the dental floss (113, 213, 320, 513, 613) to loosen the tension of the dental floss.

2. The adjustable and bendable dental floss pick (100, 200, 300, 400, 500, 600, 700) of claim 1, wherein the holding-pressing part (120, 220, 330, 410, 520, 620, 710) has a central hollow space, and the bendable part (121, 221, 411, 521, 621, 712) is respectively provided at the front end and the rear end of the holding-pressing part (120, 220, 330, 410, 520, 620, 710).

3. The adjustable and bendable dental floss pick (100, 200, 300, 400, 500, 600, 700) of claim 1, wherein the connecting part (112, 212, 512, 612) is an arc-shaped structure, which is bent upward from the holding-pressing part (120, 220, 330, 410, 520, 620, 710) to the extending direction of the two sidearms (111, 211, 310, 511, 611) so that the dental floss holder (110, 210, 510, 610) is higher than the holding-pressing part (120, 220, 330, 410, 520, 620, 710).

4. The adjustable and bendable dental floss pick (100, 200, 300, 400, 500, 600, 700) of claim 1, wherein the bottom surface of the front end and the rear end of the holding-pressing part (120, 220, 330, 410, 520, 620, 710) are respectively provided with a protruding part (522), so that when the adjustable and bendable dental floss pick (100, 200, 300, 400, 500, 600, 700) is placed on a flat surface, the floss holder (510) is not in contact with the flat surface.

5. The adjustable and bendable floss pick (100, 200, 300, 400, 500, 600, 700) of claim 1, wherein the side surface on each side of the holding-pressing part (120, 220, 330, 410, 520, 620, 710) is in an elliptical shape to press and apply pressing force.

6. The adjustable and bendable floss pick (100, 200, 300, 400, 500, 600, 700) of claim 1, wherein the holding-pressing part (120, 220, 330, 410, 520, 620, 710) further comprises an antislip part (622, 711) arranged on the top surface, the side surfaces, or the bottom surface of the holding-pressing part (120, 220, 330, 410, 520, 620, 710) to facilitate holding and pressing.

7. The adjustable and bendable floss pick (100, 200, 300, 400, 500, 600, 700) of claim 1, wherein the left and right sides of the holding-pressing part (120, 220, 330, 410, 520, 620, 710) are respectively connected with a first pressing component (122, 222, 331) for providing pressing force.

8. The adjustable and bendable floss pick (100, 200, 300, 400, 500, 600, 700) of claim 7, wherein each of the two sidearms (111, 211, 310, 511, 611) is connected to a second pressing component on a single outer side for providing pressing force.

9. The adjustable and bendable dental floss pick (100, 200, 300, 400, 500, 600, 700) of claim 8, wherein each of the first ends of the two sidearms (111, 211, 310, 511, 611) is provided with a through hole (311), wherein one end of the dental floss (113, 213, 320, 513, 613) passes through and winds around the through hole (311) of the first end of the sidearm (111, 211, 310, 511, 611), and the other end of the dental floss winds around and is fixed on the first pressing component (122, 222, 331) or the second pressing component.

10. The adjustable and bendable dental floss pick (100, 200, 300, 400, 500, 600, 700) of claim 1, wherein the elastic and soft material comprises polypropylene, polystyrene, acrylonitrile butadiene styrene resin/acrylonitrile-butadiene-styrene copolymer, polyethylene terephthalate, polyamide, polyethylene, polyurethane, polycarbonate or high-density polyethylene.

11. The adjustable and bendable dental floss pick (100, 200, 300, 400, 500, 600, 700) of claim 1, wherein the holding-pressing part (120, 220, 330, 410, 520, 620, 710) is divided into a left half and a right half, and the bendable part (121, 221, 411, 521, 621, 712) forms a connecting component to connect the left half and the right half.

12. The adjustable and bendable dental floss pick (100, 200, 300, 400, 500, 600, 700) of claim 1, wherein the dental floss (113, 213, 320, 513, 613) is bent into a C shape or a U shape.

## Patentansprüche

1. Verstellbarer und biegsamer Zahnseidenmeißel (100, 200, 300, 400, 500, 600, 700), welcher umfasst:
einen Zahnseidenhalter (110, 210, 510, 610) mit zwei Seitenarmen (111, 211, 310, 511, 611) und einem Verbindungsteil (112, 212, 512, 612), wobei die beiden Seitenarme (111, 211, 310, 511, 611) jeweils ein von dem Verbindungsteil (112, 212, 512, 612) entferntes erstes Ende und ein zweites Ende haben, das mit dem Verbindungsteil (112, 212, 512, 612) verbunden ist, wobei eine Zahnseide (113, 213, 320, 513, 613) zwischen den ersten Enden befestigt ist und die zweiten Enden sind jeweils mit der vorderen Hälfte des Verbindungsteils (112, 212, 512, 612) verbunden; und
ein Halte-Pressteil (120, 220, 330, 410, 520, 620, 710), das ein mit dem Verbindungsteil (112, 212, 512, 612) verbundenes vorderes Ende und ein von dem Verbindungsteil (112, 212, 512, 612) entferntes hinteres Ende aufweist, wobei das vordere Ende mit der hinteren Hälfte des Verbindungsteils (112, 212, 512, 612) verbunden ist,
wobei der Zahnseidenmeißel (100, 200, 300, 400, 500, 600, 700) aus einem elastischen und weichen Material gefertigt ist, **dadurch gekennzeichnet, dass** ein biegsames Teil (121, 221, 411, 521, 621, 712) in dem mittleren Abschnitt des Halte-Pressteils (120, 220, 330, 410, 520, 620, 710) ausgebildet ist, und wobei, wenn das Halte-Pressteil (120, 220, 330, 410, 520, 620, 710) gedrückt wird, die zwei Seitenarme (111, 211, 310, 511, 611) angetrieben werden, um die Zahnseide (113, 213, 320, 513, 613) zu biegen, um die Spannung der Zahnseide zu lockern.

2. Verstellbarer und biegsamer Zahnseidenmeißel (100, 200, 300, 400, 500, 600, 700) nach Anspruch 1, bei welchem das Halte-Pressteil (120, 220, 330, 410, 520, 620, 710) einen zentralen Hohlraum aufweist, und das biegsame Teil (121, 221, 411, 521, 621, 712) ist jeweils an dem vorderen und dem hinteren Ende des Halte-Pressteils (120, 220, 330, 410, 520, 620, 710) vorgesehen.

3. Verstellbarer und biegsamer Zahnseidenmeißel (100, 200, 300, 400, 500, 600, 700) nach Anspruch 1, bei welchem das Verbindungsteil (112, 212, 512, 612) eine bogenförmige Struktur ist, welche von dem Halte-Pressteil (120, 220, 330, 410, 520, 620, 710) zu der Ausdehnungsrichtung der zwei Seitenarme (111, 211, 310, 511, 611) nach oben gebogen ist, sodass der Zahnseidenhalter (110, 210, 510, 610) höher ist als das Halte-Pressteil (120, 220, 330, 410, 520, 620, 710).

4. Verstellbarer und biegsamer Zahnseidenmeißel (100, 200, 300, 400, 500, 600, 700) nach Anspruch 1, bei welchem die Unterseite des vorderen Endes und das hintere Ende des Halte-Pressteils (120, 220, 330, 410, 520, 620, 710) jeweils mit einem vorstehenden Teil (522) versehen sind, sodass, wenn der verstellbare und biegsame Zahnseidenmeißel (100, 200, 300, 400, 500, 600, 700) auf einer flachen Oberfläche platziert wird, der Zahnseidenhalter (510) nicht mit der flachen Oberfläche in Kontakt kommt.

5. Verstellbarer und biegsamer Zahnseidenmeißel (100, 200, 300, 400, 500, 600, 700) nach Anspruch 1, bei welchem die Seitenfläche an jeder Seite des Halte-Pressteils (120, 220, 330, 410, 520, 620, 710) eine elliptische Form aufweist, um Druck auszuüben und eine Druckkraft anzuwenden.

6. Verstellbarer und biegsamer Zahnseidenmeißel (100, 200, 300, 400, 500, 600, 700) nach Anspruch 1, bei welchem das Halte-Pressteil (120, 220, 330, 410, 520, 620, 710) ferner ein Antirutschteil (622, 711) umfasst, das an der Oberseite, den Seitenflächen oder der Unterseite des Halte-Pressteils (120, 220, 330, 410, 520, 620, 710) angeordnet ist, um das Halten und Drücken zu erleichtern.

7. Verstellbarer und biegsamer Zahnseidenmeißel (100, 200, 300, 400, 500, 600, 700) nach Anspruch 1, bei welchem die linke und rechte Seite des Halte-Pressteils (120, 220, 330, 410, 520, 620, 710) jeweils mit einer ersten Druckkomponente (122, 222, 331) zur Bereitstellung einer Druckkkraft verbunden sind.

8. Verstellbarer und biegsamer Zahnseidenmeißel (100, 200, 300, 400, 500, 600, 700) nach Anspruch 7, bei welchem jeder der zwei Seitenarme (111, 211, 310, 511, 611) mit einer zweiten Druckkomponente an einer einzigen Außenseite zur Bereitstellung einer Druckkkraft verbunden ist.

9. Verstellbarer und biegsamer Zahnseidenmeißel (100, 200, 300, 400, 500, 600, 700) nach Anspruch 8, bei welchem jedes der ersten Enden der zwei Seitenarme (111, 211, 310, 511, 611) mit einem Durchgangsloch (311) ausgebildet ist, wobei ein Ende der Zahnseide (113, 213, 320, 513, 613) durch das Durchgangsloch (311) des ersten Endes des Seitenarms (111, 211, 310, 511, 611) hindurchgeht und um dieses herumgewickelt ist, und das andere Ende der Zahnseide um die erste Druckkomponente (122, 222, 331) oder die zweite Druckkomponente herumgewickelt und daran fixiert ist.

10. Verstellbarer und biegsamer Zahnseidenmeißel (100, 200, 300, 400, 500, 600, 700) nach Anspruch 1, bei welchem das elastische und weiche Material Polypropylen, Polystyrol, Acrylnitril-Butadien-Styrol-Harz/Acrylnitril-Butadien-Styrol-Copolymer, Polyethylenterephthalat, Polyamid, Polyethylen, Polyurethan, Polycarbonat oder hochdichtes Polyethylen umfasst.

11. Verstellbarer und biegsamer Zahnseidenmeißel (100, 200, 300, 400, 500, 600, 700) nach Anspruch 1, bei welchem das Halte-Pressteil (120, 220, 330, 410, 520, 620, 710) in eine linke Hälfte und eine rechte Hälfte unterteilt ist, und das biegsame Teil (121, 221, 411, 521, 621, 712) bildet eine Verbindungskomponente zur Verbindung der linken Hälfte und der rechten Hälfte.

12. Verstellbarer und biegsamer Zahnseidenmeißel (100, 200, 300, 400, 500, 600, 700) nach Anspruch 1, bei welchem die Zahnseide (113, 213, 320, 513, 613) in eine C-Form oder eine U-Form gebogen ist.

## Revendications

1. Cure-dents à fil dentaire flexible et ajustable (100, 200, 300, 400, 500, 600, 700), comprenant :
un porte-fil dentaire (110, 210, 510, 610) présentant deux bras latéraux (111, 211, 310, 511, 611) et une partie de liaison (112, 212, 512, 612), dans lequel les deux bras latéraux (111, 211, 310, 511, 611) présentent respectivement une première extrémité éloignée de la partie de liaison (112, 212, 512, 612) et une seconde extrémité reliée à la partie de liaison (112, 212, 512, 612), un fil dentaire (113, 213, 320, 513, 613) est relié entre les premières extrémités, et les secondes extrémités sont respectivement reliées à la moitié avant de la partie de liaison (112, 212, 512, 612) ; et
une partie de maintien-pression (120, 220, 330, 410, 520, 620, 710) présentant une extrémité avant reliée à la partie de liaison (112, 212, 512, 612) et une extrémité arrière éloignée de la partie de liaison (112, 212, 512, 612), dans lequel l'extrémité avant est reliée à la moitié arrière de la partie de liaison (112, 212, 512, 612),
dans lequel le cure-dents à fil dentaire (100, 200, 300, 400, 500, 600, 700) est fabriqué dans un matériau élastique et souple, **caractérisé en ce qu'**une partie flexible (121, 221, 411, 521, 621, 712) est prévue dans la partie centrale de la partie de maintien-pression (120, 220, 330, 410, 520, 620, 710) et lorsque la partie de maintien-pression (120, 220, 330, 410, 520, 620, 710) est pressée, les deux bras latéraux (111, 211, 310, 511, 611) sont actionnés pour courber le fil dentaire (113, 213, 320, 513, 613) afin de desserrer la tension du fil dentaire.

2. Cure-dents à fil dentaire ajustable et flexible (100, 200, 300, 400, 500, 600, 700) selon la revendication 1, dans lequel la partie de maintien-pression (120, 220, 330, 410, 520, 620, 710) présente un espace creux central, et la partie flexible (121, 221, 411, 521, 621, 712) est respectivement prévue à l'extrémité avant et à l'extrémité arrière de la partie de maintien-pression (120, 220, 330, 410, 520, 620, 710).

3. Cure-dents à fil dentaire ajustable et flexible (100, 200, 300, 400, 500, 600, 700) selon la revendication 1, dans lequel la partie de liaison (112, 212, 512, 612) est une structure en forme d'arc qui est pliée vers le haut à partir de la partie de maintien-pression (120, 220, 330, 410, 520, 620, 710) vers la direction d'extension des deux bras latéraux (111, 211, 310, 511, 611) de sorte que le cure-dents à fil dentaire (110, 210, 510, 610) soit plus haut que la partie de maintien-pression (120, 220, 330, 410, 520, 620, 710).

4. Cure-dents à fil dentaire ajustable et flexible (100, 200, 300, 400, 500, 600, 700) selon la revendication 1, dans lequel la surface inférieure de l'extrémité avant et l'extrémité arrière de la partie de maintien-pression (120, 220, 330, 410, 520, 620, 710) sont respectivement munies d'une partie saillante (522) de sorte que lorsque le cure-dents à fil dentaire ajustable et flexible (100, 200, 300, 400, 500, 600, 700) est placé sur une surface plane, le porte-fil (510) ne soit pas en contact avec la surface plane.

5. Cure-dents à fil dentaire ajustable et flexible (100, 200, 300, 400, 500, 600, 700) selon la revendication 1, dans lequel la surface latérale de chaque côté de la partie de maintien-pression (120, 220, 330, 410, 520, 620, 710) est de forme elliptique pour presser et appliquer une force de pression.

6. Cure-dents à fil dentaire ajustable et flexible (100, 200, 300, 400, 500, 600, 700) selon la revendication 1, dans lequel la partie de maintien-pression (120, 220, 330, 410, 520, 620, 710) comprend en outre une partie antidérapante (622, 711) disposée sur la surface supérieure, les surfaces latérales ou la surface inférieure de la partie de maintien-pression (120, 220, 330, 410, 520, 620, 710) pour faciliter le maintien et la pression.

7. Cure-dents à fil dentaire ajustable et flexible (100, 200, 300, 400, 500, 600, 700) selon la revendication 1, dans lequel les côtés gauche et droit de la partie de maintien-pression (120, 220, 330, 410, 520, 620, 710) sont respectivement reliés à un premier composant de pression (122, 222, 331) pour fournir une force de pression.

8. Cure-dents à fil dentaire ajustable et flexible (100, 200, 300, 400, 500, 600, 700) selon la revendication 7, dans lequel chacun des deux bras latéraux (111, 211, 310, 511, 611) est relié à un second composant de pression sur un seul côté extérieur pour fournir une force de pression.

9. Cure-dents à fil dentaire ajustable et flexible (100, 200, 300, 400, 500, 600, 700) selon la revendication 8, dans lequel chacune des premières extrémités des deux bras latéraux (111, 211, 310, 511, 611) est munie d'un trou traversant (311), dans lequel une extrémité du fil dentaire (113, 213, 320, 513, 613) passe à travers et s'enroule autour du trou traversant (311) de la première extrémité du bras latéral (111, 211, 310, 511, 611), et l'autre extrémité du fil dentaire s'enroule autour et est fixée sur le premier composant de pression (122, 222, 331) ou le second composant de pression.

10. Cure-dents à fil dentaire ajustable et flexible (100, 200, 300, 400, 500, 600, 700) selon la revendication 1, dans lequel le matériau élastique et souple comprend du polypropylène, du polystyrène, un copolymère de résine d'acrylonitrile butadiène styrène/acrylonitrile-butadiène-styrène, polyéthylène téréphtalate, polyamide, polyéthylène, polyuréthane, polycarbonate ou polyéthylène haute densité.

11. Cure-dents à fil dentaire ajustable et flexible (100, 200, 300, 400, 500, 600, 700) selon la revendication 1, dans lequel la partie de maintien-pression (120, 220, 330, 410, 520, 620, 710) est divisée en une moitié gauche et une moitié droite, et la partie flexible (121, 221, 411, 521, 621, 712) forme un composant de liaison pour relier la moitié gauche et la moitié droite.

12. Cure-dents à fil dentaire ajustable et flexible (100, 200, 300, 400, 500, 600, 700) selon la revendication 1, dans lequel le fil dentaire (113, 213, 320, 513, 613) est plié en forme de C ou en forme de U.
